# EUROPÄISCHE PATENTSCHRIFT

(11) **EP 1 004 170 B1**
(45) Veröffentlichungstag und Bekanntmachung des Hinweises auf die Patenterteilung: **07.11.2001**
(21) Anmeldenummer: 98945185.1
(22) Anmeldetag: 08.08.1998
(51) Int. Cl.: H04B 1/20

(54) **VORRICHTUNG ZUR WIEDERGABE VON AUDIOSIGNALEN IN EINEM KRAFTFAHRZEUG**
DEVICE FOR PLAYING BACK AUDIO SIGNALS IN A MOTOR VEHICLE
DISPOSITIF DE LECTURE DE SIGNAUX AUDIO DANS UN VEHICULE

(30) Priorität: 16.08.1997 DE 19735545
(43) Veröffentlichungstag der Anmeldung: 31.05.2000
(73) Patentinhaber: GRUNDIG Aktiengesellschaft, 90471 Nürnberg (DE)
(72) Erfinder: DAUCHER, Michael, D-90522 Oberasbach (DE)
(74) Vertreter: Pröll, Jürgen
(86) Internationale Anmeldenummer: EP9805037
(87) Internationale Veröffentlichungsnummer: WO9909663

(56) Entgegenhaltungen:
- EP-A- 0 129 794
- EP-A- 0 519 111
- WO-A-92/22154
- DE-A- 19 625 689

## Beschreibung

Die Erfindung betrifft eine Vorrichtung zur Wiedergabe von Audiosignalen in einem Kraftfahrzeug mit einem Autoradio, welches eine Bedientastatur, eine Signalverarbeitungsschaltung, eine Anschlußbuchse für einen CD-Spieler und mindestens einen Ausgangsanschluß für einen Lautsprecher aufweist.

Gegenwärtig befinden sich auf dem Markt eine Vielzahl von Autoradios, welche jeweils eine Bedientastatur, eine Signalverarbeitungsschaltung, eine Anschlußbuchse für einen CD-Spieler und mindestens einen Ausgangsanschluß für einen Lautsprecher aufweisen.

Unabhängig davon wurde in den letzten Jahren ein digitales terrestrisches Hörrundfunksystem entwickelt, welches unter dem Namen DAB (Digital Audio Broadcasting) bekannt geworden ist. Die technische Funktionsweise und die Eigenschaften dieses Systems sowie der grundsätzliche Aufbau der zugehörigen Sender und Empfänger sind beispielsweise in dem Buch "Digitale Technik für Hörfunk und Fernsehen" von Paul Dambacher, erschienen im R. v. Decker's Verlag, G. Schenck, Heidelberg, 1995, auf den Seiten 100 -125, beschrieben.

Da es vorgesehen ist, daß zumindest für einen längeren Zeitraum in der Zukunft DAB-Signale zusätzlich zu den herkömmlichen UKW-Rundfunksignalen ausgestrahlt werden, besteht bei zukünftigen Autoradiosystemen die Notwendigkeit, sowohl einen Empfänger für DAB-Rundfunksignale als auch einen Empfänger für UKW-Rundfunksignale vorzusehen.

Aus DE 3510606-C2 ist eine Audiogerätekombination für ein Kraftfahrzeug, bestehend aus einem Autoradio mit Programmstummschaltung und Verkehrsfunkerkennung, einer hochwertigen Signalquelle, insbesondere einem CD-Spieler, und einem hochwertigen NF-Verstärker, dem die zu verstärkenden NF-Signale über eine Umschalteinrichtung wahlweise zugeführt werden, bekannt. Die Umschalteinrichtung ist in der hochwertigen Signalquelle angeordnet und wird von einem Schwellwertschalter gesteuert, der den Pegel des an die Umschalteinrichtung gelegten NF-Ausgangs des Autoradios überwacht und das Durchschalten des NF-Signals der hochwertigen Signalquelle an den NF-Verstärker nur dann zuläßt, wenn er kein vom NF-Ausgang des Autoradios kommendes und eine vorgegebene Rauschschwelle überschreitendes Signal detektiert.

Aus DE 4136068-A1 ist ein Rundfunkübertragungssystem für UKW-FM und/oder AM-Rundfunk bekannt. Mit einem UKW-FM- und/oder AM-Rundfunksignal wird ein erstes Steuersignal übertragen, welches mit einem ersten Steuersignaldecoder in einem UKW-FM- und/oder AM-Rundfunkempfänger decodiert und zur Einschaltung und/oder Steuerung eines Rundfunkempfängers für digitalen Rundfunk verwendet wird.

Aus DE 4300848-A1 ist ein Autotelefonsystem, bestehend aus wenigstens einen Audiogerät, einer Audiokopfeinheit mit Systemsteuermitteln zum Steuern des Audiogerätes über einen Datenbus und Anzeigemitteln zum Anzeigen von Audioinformation, bekannt. Im weiteren weist das Autotelefonsystem eine Telefoneinheit und einen Halter auf, der in der Kabine eines Fahrzeugs zum entfernbaren Halten der Telefoneinheit ausgebildet ist. Der Halter weist Verbindungsmittel zum elektrischen Verbinden der Telefoneinheit und der Systemsteuermittel bei Aufnahme der Telefoneinheit auf. Das Systemsteuermittel weist seinerseits eine Schnittstelle zum Aufgeben von von der Telefoneinheit ausgegebenen Information auf den Datenbus auf, so daß das Anzeigemittel die Telefoninformation ausgibt.

Aus DE 19545059-A1 ist eine Einrichtung zur Kommunikation und Information in einem Kraftfahrzeug mit zumindest einer Audio-Komponente, insbesondere einem Wiedergabegerät für Musik-CDs und zumindest einer Informations-Komponente, beispielsweise einem Routenführungssystem, welches ebenfalls auf Daten zurückgreift, die auf CDs gespeichert sind.Die Einrichtung kann mit weiteren von Insassen des Kraftfahrzeugs nutzbaren Komponenten wie Telefon oder Computer, gekoppelt werden.

Ausgehend von diesem Stand der Technik liegt der Erfindung die Aufgabe zugrunde, eine Vorrichtung zur Wiedergabe von Audiosignalen in einem Kraftfahrzeug mit den im Oberbegriff des Anspruchs1 angegebenen Merkmalen derart weiterzubilden, daß mit möglichst geringem Aufwand sowohl DAB-Rundfunksignale als auch herkömmliche UKW-Rundfunksignale empfangen und wiedergegeben werden können.

Diese Aufgabe wird bei einer Vorrichtung zur Wiedergabe von Audiosignalen in einem Kraftfahrzeug mit den im Oberbegriff des Anspruchs 1 angegebenen Merkmalen durch die im kennzeichnenten Teil des Anspruchs 1 angegebenen Merkmale gelöst. Vorteilhafte Ausgestaltungen und Weiterbildungen der Erfindung ergeben sich aus den abhängigen Ansprüchen.

Die Vorteile der Erfindung bestehen insbesondere darin, daß das DAB-Empfangsgerät derart in herkömmliche, in sehr hoher Stückzahl am Markt befindliche Autoradioempfangsanlagen integriert ist, daß die einzelnen Komponenten der bereits vorhandenen Autoradioempfangsanlagen unverändert weiterverwendet werden können, d. h. nicht durch neuentwickelte Geräte ersetzt werden müssen.

Mittels der in Anpruch 3 angegebenen Merkmale wird erreicht, daß das DAB-Empfangsgerät keine eigene, gesonderte Anschlußbuchse für das Stromversorgungsnetz des Kraftfahrzeugs benötigt. Damit entfällt auch ein zusätzlicher Verkabelungsaufwand im Kraftfahrzeug.

Mittels der in den Ansprüchen 4-6 angegebenen Merkmale wird erreicht, daß das DAB-Empfangsgerät an beliebiger Stelle im Kraftfahrzeug oder im Kofferraum positioniert werden kann. Es muß lediglich dafür gesorgt werden, daß die dem DAB-Empfangsgerät zugeordnete Infrarot-Sende/Empfangseinheit so angeordnet ist, daß eine Übertragung von Infrarotsignalen von und zu einem im Fahrzeuginnenraum benutzten Fernbedienungsgeber sichergestellt ist. Die Vorteile der im Anspruch 7 angegebenen Merkmale bestehen darin, daß auf dem Display des Fernbedienungsgebers aus dem DAB-Empfangssignal abgeleitete Datensignale darstellbar sind. Damit kann jeder der Fahrzeuginsassen, der den Fernbedienungsgeber in Händen hält, unabhängig davon, ob er vorne oder hinten sitzt, die mit dem DAB-Signal übertragenen Zusatzinformationen auf seinem Platz im Fahrzeug betrachten und auch von seinem Platz im Fahrzeug aus dem DAB-Empfangsgerät Bedienbefehle übermitteln.
Durch die in den Ansprüchen 8-10 angegebenen Merkmale wird erreicht, daß bestimmte, mittels der Bedieneinheit des Autoradios eingegebene Bedienbefehle in einer im DAB-Empfangsgerät angeordneten Auswerteschaltung ausgewertet werden können. Dies hat zur Folge, daß auch die Bedieneinheit eines ohnehin vorhandenen Autoradios unverändert weiterverwendet werden kann.

Durch die im Anspruch 11 angegebenen Merkmale wird der Vorteil erzielt, daß zusammen mit der beanspruchten Vorrichtung auch ein Datenwiedergabegerät verwendet werden kann, welches ausschließlich zur Verarbeitung und Wiedergabe von zusammen mit dem DAB-Signal übertragenen Begleitinformationen wie Wetterinformationen, Navigationsinformationen, Tourismusinformationen, lokale Nachrichten, usw., vorgesehen ist.

Die Vorteile einer Vorrichtung mit dem in Anspruch 12 angegebenen Merkmalen bestehen darin, daß die Anzahl der Anschlüsse an das Bord-Stromversorgungsnetz, die von den Geräten der beanspruchten Vorrichtung benötigt wird, klein gehalten ist. Nur eines dieser Geräte benötigt einen derartigen Anschluß an das Bord-Stromversorgungsnetz, beispielsweise das Autoradio. Alle anderen Geräte werden über zwischen den Geräten ohnehin vorhandene Verbindungskabel direkt oder indirekt vom Autoradio aus stromversorgt.

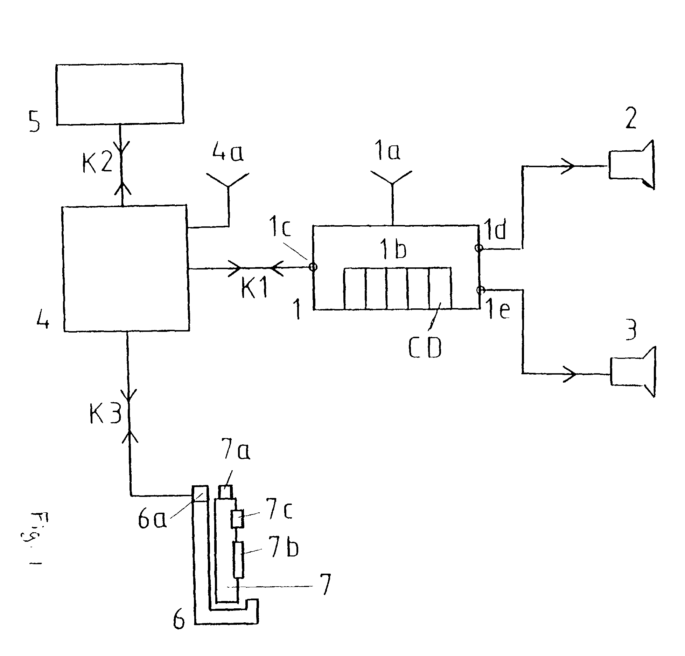

Weitere vorteilhafte Eigenschaften der Erfindung ergeben sich aus der Erläuterung eines Ausführungsbeispiels anhand der Figur.

Diese zeigt eine Vorrichtung bzw. ein System zur Wiedergabe von Audiosignalen in einem Kraftfahrzeug, welche Vorrichtung folgende Komponenten aufweist: ein Autoradiogerät 1, Lautsprecher 2 und 3, ein DAB-Empfangsgerät 4, einen CD-Spieler 5, eine Halterung 6 für einen Fernbedienungsgeber und einen in die Halterung 6 eingesetzten Fernbedienungsgeber 7.

Das Autoradio 1 ist ein herkömmliches Autoradio, wie es heute in sehr hoher Stückzahl am Markt vorhanden ist. Dieses Autoradio 1 ist an eine UKW-Antenne 1a angeschlossen, bei der es sich um eine Dachantenne oder um eine Scheibenantenne handeln kann. Weiterhin weist das Autoradio in bekannter Weise eine Bedientastatur 1b, eine Signalverarbeitungsschaltung, eine Anschlußbuchse 1c für einen CD-Spieler und Ausgangsanschlüsse 1d und 1e auf, an die die Lautsprecher 2 und 3 angeschlossen sind. Die Bedientastatur 1b weist eine Taste CD auf, mittels der der Wiedergabebetrieb des CD-Spielers 5 gestartet und gestoppt werden kann.

Zur Durchführung eines herkömmlichen UKW-Empfangsbetriebes wird das Autoradio in herkömmlicher Weise mittels der Bedientastatur 1b bedient. Die Ausgangssignale des Autoradios werden über die Lautsprecher wiedergegeben.

Der CD-Wiedergabebetrieb wird dadurch eingeleitet, daß der Benutzer die auf der Bedientastatur 1b des Autoradios 1 angeordnete CD-Taste einmal betätigt. Diese Tastenbetätigung bewirkt eine Übertragung von Steuersignalen vom Autoradio aus über das Verbindungskabel K1 zum DAB-Empfangsgerät 4. Gleichzeitig werden über dieses Verbindungskabel Versorgungssignale vom Autoradio aus, welches an das Kfz-Bordnetz angeschlossen ist, an das DAB-Empfangsgerät 4 übertragen.
Im DAB- Empfangsgerät 4 werden die Steuersignale einer Auswerteschaltung zugeführt, die durch einen Mikrocomputer realisiert ist. Dieser erkennt anhand der übertragenen Steuersignale, daß eine CD-Wiedergabe gewünscht ist und leitet diese Steuersignale in unveränderter Form und auch die Versorgungssignale über das Verbindungskabel K2 an den CD-Spieler 5 weiter. Ferner schaltet der Mikrocomputer eine im DAB-Empfangsgerät vorgesehene Umschaltvorrichtung in eine erste Schaltstellung. In dieser ersten Schaltstellung ist das DAB-Empfangsgerät 4 für die vom CD-Spieler 5 stammenden Audiosignale durchlässig, so daß die CD-Wiedergabesignale über das DAB-Empfangsgerät 4 an die Anschlußbuchse 1c des Autoradios 1 weitergeleitet werden. Von dort aus werden die CD-Wiedergabesignale unter Benutzung der Signalverarbeitungsschaltungen des Autoradios 1 in herkömmlicher Weise an die Lautsprecher 2 und 3 weitergegeben.

Zur Beendigung des CD-Betriebes wird die Taste CD der Bedientastatur 1b erneut betätigt. Dieser Befehl wird in gleicher Weise wie der oben beschriebene Einschaltbefehl über das DAB-Empfangsgerät zum CD-Spieler übertragen und dort in herkömmlicher Weise zur Beendigung der CD-Wiedergabe verwendet.

Zur Durchführung eines DAB-Empfangsbetriebes wird zunächst eine Doppelbetätigung der Taste CD der Bedientastatur 1b des Autoradios 1 durchgeführt. Diese Doppelbetätigung wird vom Mikrocomputer des DAB-Empfangsgerätes erkannt, der daraufhin die Umschaltvorrichtung in eine zweite Schaltstellung bringt. In dieser zweiten Schaltstellung wird ein aus den mittels der DAB-Antenne 4a empfangenen DAB-Rundfunksignalen abgeleitetes Audiosignal über das Verbindungskabel K1 an die Anschlußbuchse 1c des Autoradios 1 weitergeleitet. Dieses Signal hat dieselbe Signalform wie das Ausgangssignal des CD-Spielers 5 und kann deshalb im Autoradio in derselben Weise verarbeitet werden wie ein Ausgangssignal des CD-Spielers und vom Autoradio aus über dessen Ausgangsanschlüsse 1d und 1e an die Lautsprecher 2 und 3 weitergegeben werden.
Während dieses DAB-Empfangsbetriebes ist der CD-Spieler vom Autoradio abgetrennt und kann deshalb die Wiedergabe des DAB-Audiosignals über die Lautsprecher nicht stören.

Das DAB-Empfangsgerät ist in vorteilhafter Weise fernbedienbar. Dadurch wird dem Umstand Rechnung getragen, daß der Platz im Armaturenbrett von Fahrzeugen begrenzt ist und deshalb in vielen Fällen zur Aufnahme mehrerer Audiogeräte nicht ausreicht. Das DAB-Empfangsgerät kann beispielsweise ebenso wie der CD-Spieler 5, bei dem es sich auch um einen CD-Wechsler handeln kann, im Kofferraum des Fahrzeugs angeordnet sein.

Die Fernbedienbarkeit des DAB-Empfangsgerätes 4 wird dadurch ermöglicht, daß das DAB-Empfangsgerät über ein Verbindungskabel K3 mit einer Infrarot-Sende/Empfangseinheit 6a verbunden ist. Diese Infrarot-Sende/Empfangseinheit 6a ist in vorteilhafter Weise entweder in die Halterung 6 integriert oder fest mit dieser verbunden. Das Verbindungskabel K3 ist zu einer bidirektionalen Übertragung von Signalen vorgesehen.

Zum einen werden mittels der Bedientastatur 7b des Fernbedienungsgebers 7 erzeugte Bedienbefehle, die von der Infrarot-Sende/Empfangseinheit 6a empfangen werden, an das DAB-Empfangsgerät 4 weitergeleitet. Zum anderen werden Datensignale, die im DAB-Empfangsgerät 4 aus dem empfangenen DAB-Rundfunksignal abgeleitet werden, über die Infrarot-Sende/Empfangseinheit 6a zur Infrarot-Sende/Empfangseinheit 7a des Fernbedienungsgebers 7 übertragen, im Fernbedienungsgeber ausgewertet und auf dessen Display 7c dargestellt. Bei diesen Datensignalen kann es sich um programmbegleitende Datensignale wie beispielsweise Sendernamen, Titel von Musikstücken, usw., oder um programmunabhängige Daten wie Verkehrsnachrichten, Wettermeldungen, usw., handeln. Der Fernbedienungsgeber 7 ist sowohl dann betreibbar, wenn er in die Halterung 6 eingesetzt ist als auch dann, wenn er herausgenommen ist.

Die Halterung ist im Fahrzeug vorzugsweise so positioniert, daß sie im Blickfeld des Fahrers liegt, der dann auch während der Fahrt bei eingesetztem Fernbedienungsgeber sowohl Bedienbefehle eingeben kann als auch am Display 7c dargestellte Nachrichten bzw. Datensignale lesen kann.

In vorteilhafter Weise kann die Halterung 6 ferner als Ladestation für Akkumulatoren des Fernbedienungsgebers 7 verwendet werden. Zu diesem Zweck werden über das Verbindungskabel K3 ebenfalls Versorgungssignale vom DAB-Empfangsgerät 4 zur Halterung 6 übertragen. Ferner müssen in diesem Fall sowohl an der Halterung 6 als auch am Fernbedienungsgeber 7 Ladekontakte vorgesehen sein.

Bei aus der Halterung 6 herausgenommenem Fernbedienungsgebers 7 ist letzterer von jedem der Passagiere des Kraftfahrzeugs bedienbar und zwar unabhängig davon, ob der jeweilige Passagier im Fahrzeug vorne oder hinten bzw. links oder rechts sitzt. Es muß lediglich sichergestellt sein, daß zwischen der Infrarot-Sende/Empfangseinheit 6a und der Infrarot-Sende/Empfangseinheit 7a eine Infrarot-Signalübertragung erfolgen kann. Jeder der Passagiere kann dann von seinem Sitzplatz aus sowohl die auf dem Display 7 c des Fernbedienungsgebers 7 dargestellten Signale lesen als auch von seinem Sitzplatz aus Bedienbefehle für das DAB-Empfangsgerät eingeben, beispielsweise um eine Umschaltung auf ein anderes DAB-Rundfunkprogramm zu bewirken.

Eine vorteilhafte Weiterbildung der Erfindung besteht darin, daß an das DAB-Empfangsgerät 4 ein weiteres, nicht gezeichnetes Datenwiedergabegerät angeschlossen wird. Dieses ist ausschließlich zur Aufbereitung und Wiedergabe von aus dem DAB-Empfangssignal abgeleiteten Datensignalen vorgesehen. Bei diesen Datensignalen kann es sich beispielsweise um Wetterinformationen, Navigationsinformationen, Informationen über lokale Gasthäuser, Hotels, Einkaufsmöglichkeiten oder Verkehrsnachrichten handeln.

Nach alledem wird bei der vorliegenden Erfindung ein DAB-Empfangsgerät in vorteilhafter Weise in eine bereits bestehende Anlage zur Wiedergabe von Audiosignalen in einem Kraftfahrzeug integriert. Die bestehende Anlage kann unverändert weiterbetrieben werden. Es ist lediglich notwendig, das ohnehin vorhandene CD-Standardkabel in eine Buchse des DAB-Empfangsgerätes einzustecken und ein weiters Verbindungskabel zwischen dem DAB-Empfangsgerät und der CD-Anschlußbuchse des Autoradios vorzusehen. Eine einfache und bequeme Bedienbarkeit des DAB-Empfangsgerätes wird dadurch ermöglicht, daß das DAB-Empfangsgerät durch Verwendung einer Infrarot-Sende/Empfangseinheit für jeden der Passagiere des Fahrzeugs fernbedienbar gemacht wird.

## Patentansprüche

1. Vorrichtung zur Wiedergabe von Audiosignalen in einem Kraftfahrzeug, mit einem UKW/AM-Autoradio, welches eine Bedientastatur, eine Signalverarbeitungsschaltung, eine Anschlußbuchse für einen CD-Spieler und mindestens einen Ausgangsanschluß für einen Lautsprecher aufweist,
**gekennzeichnet durch** ein DAB-Empfangsgerät, welches über die Anschlußbuchse für den CD-Spieler angeschloßen ist und daß das DAB-Empfangsgerät eine Umschaltvorrichtung aufweist, über die in einem ersten Schaltzustand ein Ausgangssignal des CD-Spielers und in einem zweiten Schaltzustand ein im DAB-Empfangsgerät generiertes Audiosignal an das UKW/AM-Autoradio weiterleitet.

2. Vorrichtung nach Anspruch 1,
**dadurch gekennzeichnet, daß**
der CD-Spieler ein CD-Wechsler ist.

3. Vorrichtung nach einem oder mehreren der vorhergehenden Ansprüche,
**dadurch gekennzeichnet, daß**
das DAB-Empfangsgerät mit dem UKW/AM-Autoradio über ein Verbindungskabel verbunden ist, über welches vom DAB-Empfangsgerät zum UKW/AM-Autoradio Audiosignale und vom UKW/AM-Autoradio zum DAB-Empfangsgerät Versorgungssignale und Steuersignale übertragbar sind.

4. Vorrichtung nach einem oder mehreren der vorhergehenden Ansprüche,
**dadurch gekennzeichnet, daß**
das DAB-Empfangsgerät fernbedienbar ist.

5. Vorrichtung nach Anspruch 4,
**dadurch gekennzeichnet, daß**
das DAB-Empfangsgerät mit einer Infrarot-Sende/Empfangseinheit verbunden ist.

6. Vorrichtung nach Anspruch 5,
**dadurch gekennzeichnet, daß**
die Infrarot-Sende/Empfangseinheit in eine zur Aufnahme eines Fernbedienungsgebers vorgesehene Halterung integriert oder an dieser befestigt ist und daß der Fernbedienungsgeber ebenfalls mit einer Infarot-Sende/Empfangseinheit versehen ist.

7. Vorrichtung nach Anspruch 6,
**dadurch gekennzeichnet, daß**
der Fernbedienungsgeber ein Display aufweist, auf welchem aus dem DAB-Empfangssignal abgeleitete Datensignale darstellbar sind.

8. Vorrichtung nach einem oder mehreren der vorhergehenden Ansprüche,
**dadurch gekennzeichnet, daß**
das DAB-Empfangsgerät einen Mikrocomputer aufweist, der in Ansprache auf einen mittels der Bedientastatur des UKW/AM-Autoradios erzeugten ersten Bedienbefehl die Umschaltvorrichtung derart steuert, daß das Ausgangssignal des CD-Spielers an das UKW/AM-Autoradio weitergeleitet wird und in Ansprache auf einen mittels der Bedientastatur des UKW/AM-Autoradios erzeugten zweiten Bedienbefehl die Umschaltvorrichtung derart steuert, daß das im DAB-Empfangsgerät generierte Audiosignal an das UKW/AM-Autoradio weitergeleitet wird.

9. Vorrichtung nach Anspruch 8,
**dadurch gekennzeichnet, daß**
das UKW/AM-Autoradio eine CD-Taste aufweist, durch deren einmalige Betätigung der erste Bedienbefehl eingebbar ist.

10. Vorrichtung nach Anspruch 9,
**dadurch gekennzeichnet, daß**
der zweite Bedienbefehl durch eine Doppelbetätigung der auf der Bedieneinheit des UKW/AM-Autoradios vorgesehenen CD-Taste eingebbar ist.

11. Vorrichtung nach einem oder mehreren der vorhergehenden Ansprüche,
**dadurch gekennzeichnet, daß**
sie weiterhin ein an das DAB-Empfangsgerät angeschlossenes Datenwiedergabegerät aufweist, welches ausschließlich zur Aufbereitung und Wiedergabe von aus dem DAB-Empfangssignal abgeleiteten Datensignalen vorgesehen ist.

12. Vorrichtung nach einem oder mehreren der vorhergehenden Ansprüche,
**dadurch gekennzeichnet, daß**
die Versorgungsspannung und die Steuersignale für den CD-Spieler dem CD-Spieler über das DAB-Empfangsgerät zuleitbar sind.

## Claims

1. Device for reproducing audio signals in a motor vehicle, comprising VHF/AM car radio that has an operating keyboard, a signal processing circuit, a connecting socket for a CD player and at least one output connection for a loudspeaker,
**characterized by**
a DAB receiver that is connected via the connecting socket for the CD player and in that the DAB receiver has a switchover device that conveys, in a first switching state, an output signal of the CD player and, in a second switching state, an audio signal generated in the DAB receiver to the VHF/AM car radio.

2. Device according to Claim 1,
**characterized in that**
the CD player is a CD changer.

3. Device according to one or more of the preceding claims,
**characterized in that**
the DAB receiver is connected to the VHF/AM car radio by means of a connecting cable via which audio signals can be transmitted from the DAB receiver to the VHF/AM car radio and supply signals and control signals can be transmitted from the VHF/AM car radio to the DAB receiver.

4. Device according to one or more of the preceding claims,
**characterized in that**
the DAB receiver is remote-controllable.

5. Device according to Claim 4,
**characterized in that**
the DAB receiver is connected to an infrared transmitting/receiving unit.

6. Device according to Claim 5,
**characterized in that**
the infrared transmitting/receiving unit is built into a mounting provided for receiving a remote controller or is attached to it and **in that** the remote controller is likewise provided with an infrared transmitting/ receiving unit.

7. Device according to Claim 6,
**characterized in that**
the remote controller has a display on which data signals can be displayed that are derived from the received DAB signal.

8. Device according to one or more of the preceding claims,
**characterized in that**
the DAB receiver has a microcomputer that, in response to a first operating instruction generated by means of the operating keyboard of the VHF/AM car radio, controls the switchover device in such a way that the output signal of the CD player is conveyed to the VHF/AM car radio and, in response to a second operating instruction generated by means of the operating keyboard of the VHF/AM car radio, controls the switchover device in such a way that the audio signal generated in the DAB receiver is conveyed to the VHF/AM car radio.

9. Device according to Claim 8,
**characterized in that**
the VHF/AM car radio has a CD key through which the first operating instruction can be entered by actuating it once.

10. Device according to Claim 9,
**characterized in that**
the second operating instruction can be entered by a double actuation of the CD key provided on the operating unit of the VHF/AM car radio.

11. Device according to one or more of the preceding claims,
**characterized in that**
it furthermore has a data reproduction appliance that is connected to the DAB receiver and which is provided solely for processing and reproducing data signals derived from the received DAB signal.

12. Device according to one or more of the preceding claims,
**characterized in that**
the supply voltage and the control signals for the CD player can be fed to the CD player via the DAB receiver.

## Revendications

1. Dispositif pour reproduire des signaux audio dans un véhicule automobile, comportant un autoradio à ondes ultracourtes/modulation d'amplitude, qui comporte un clavier de commande, un circuit de traitement de signaux, une prise de raccordement pour un lecteur de disques compacts et au moins une borne de sortie pour un haut-parleur, **caractérisé par** un appareil de réception DAB, qui est raccordé au lecteur de disques compacts par l'intermédiaire de la prise et que l'appareil de réception DAB comporte un dispositif de commutation, au moyen duquel, dans un premier état de commutation, un signal de sortie du lecteur de disques compacts est transmis et, dans un second état de commutation, un signal audio produit par l'appareil de réception DAB est transmis à l'autoradio à ondes ultracourtes/modulation d'amplitude.

2. Dispositif selon la revendication 1, **caractérisé en ce que** le lecteur de disques compacts est un changeur de disques compacts.

3. Dispositif selon une ou plusieurs des revendications précédentes, **caractérisé en ce que** l'appareil de réception DAB est relié à l'autoradio à ondes ultracourtes/modulation d'amplitude par l'intermédiaire d'un câble de liaison, au moyen duquel des signaux audio peuvent être transmis de l'appareil de réception DAB à l'autoradio à ondes ultracourtes/modulation d'amplitude et des signaux d'alimentation et des signaux de commande peuvent être transmis de l'autoradio à ondes ultracourtes/ modulation d'amplitude à l'appareil de réception DAB.

4. Dispositif selon l'une ou plusieurs des revendications précédentes, **caractérisé en ce que** l'appareil de réception DAB est télécommandable.

5. Dispositif selon la revendication 4, **caractérisé en ce que** l'appareil de réception DAB est relié à une unité d'émission/réception à infrarouge.

6. Dispositif selon la revendication 5, **caractérisé en ce que** l'unité d'émission/réception infrarouge est intégrée dans un support prévu pour loger un générateur de télécommande ou est fixée sur ce support et que le générateur de télécommande est également pourvu d'une unité d'émission/réception à infrarouge.

7. Dispositif de commande selon la revendication 6, **caractérisé en ce que** le générateur de télécommande possède un dispositif d'affichage, sur lequel des signaux de données dérivés du signal de réception DAB peuvent être représentés.

8. Dispositif selon une ou plusieurs des revendications précédentes, **caractérisé en ce que** l'appareil de réception DAB comporte un micro-ordinateur, qui commande le dispositif de commutation en réponse à une première instruction de commande produite au moyen du clavier de commande de l'autoradio à ondes ultracourtes/modulation d'amplitude, de telle sorte que le signal de sortie du lecteur de disques CD est transmis à l'autoradio à ondes ultracourtes/modulation d'amplitude, et commande le dispositif de commutation en réponse à une seconde instruction de commande produite au moyen d'un clavier de commande de l'autoradio à ondes ultracourtes/ modulation d'amplitude de telle sorte que le signal produit dans l'appareil de réception DAB est transmis à l'autoradio à ondes ultracourtes/modulation d'amplitude.

9. Dispositif selon la revendication 8, **caractérisé en ce que** l'autoradio à ondes ultracourtes/ modulation d'amplitude comporte une touche pour disque compact, dont un actionnement, exécuté une seule fois, permet d'introduire une première instruction de commande.

10. Dispositif selon la revendication 9, **caractérisé en ce que** la seconde instruction de commande peut être introduite au moyen d'un actionnement double de la touche pour disque compact prévue sur l'unité de commande de l'autoradio à ondes ultracourtes/modulation d'amplitude.

11. Dispositif selon une ou plusieurs des revendications précédentes, **caractérisé en ce qu'**il comporte en outre un appareil de reproduction de données, qui est raccordé à l'appareil de réception DAB et qui est prévu exclusivement pour la préparation et la reproduction de signaux de données dérivés du signal de réception DAB.

12. Dispositif selon une ou plusieurs des revendications précédentes, **caractérisé en ce que** la tension d'alimentation et les signaux de commande pour le lecteur de disques compacts peuvent être envoyés au lecteur de disques compacts par l'intermédiaire de l'appareil de réception DAB.
